# EUROPÄISCHE PATENTSCHRIFT

(11) **EP 3 895 835 B1**
(45) Veröffentlichungstag und Bekanntmachung des Hinweises auf die Patenterteilung: **03.05.2023**
(21) Anmeldenummer: 21155358.1
(22) Anmeldetag: 05.02.2021
(51) Int. Cl.: B23K 11/11, B23K 11/30, B23K 11/25, B23K 101/00

(54) **VERFAHREN ZUM WIDERSTANDSSCHWEISSEN**
METHOD FOR RESISTANCE WELDING
PROCÉDÉ DE SOUDAGE PAR RÉSISTANCE

(30) Priorität: 14.04.2020 DE 102020204667
(43) Veröffentlichungstag der Anmeldung: 20.10.2021
(73) Patentinhaber: Robert Bosch GmbH, 70442 Stuttgart (DE)
(72) Erfinder: Dieterle, Martin, 71636 Ludwigsburg (DE); Shakirov, Damir, 75223 Niefern-Oeschelbronn (DE); Haeufgloeckner, Juergen, 63936 Schneeberg (DE); Pychynski, Tim, 76137 Karlsruhe (DE); Slavnic, Sinisa, 28357 Bremen (DE); Zhou, Baifan, 71229 Leonberg (DE); Mcconnell, Sean, 69434 Hirschhorn Am Neckar (DE); Bleier, Fabian, 70180 Stuttgart (DE)

(56) Entgegenhaltungen:
- DE-A1- 3 545 158
- DE-A1-102007 002 319
- DE-U1-202011 000 875

## Beschreibung

Die vorliegende Erfindung betrifft ein Verfahren zum Widerstandsschweißen sowie eine Steuereinheit, ein Schweißgerät und ein Computerprogramm zu dessen Durchführung.

### Stand der Technik

Mittels Schweißprozessen wie beispielsweise dem Widerstandsschweißen können Werkstücke stoffschlüssig miteinander verbunden werden. Beispielsweise werden im Zuge des automatisierten Karosserierohbaus durch robotergeführte Schweißzangen unterschiedliche Werkstücke, z.B. Bleche, mittels Widerstandsschweißen miteinander verschweißt.

Im Zuge des Widerstandsschweißens werden zunächst im Zuge einer sog. Kraftaufbauphase zwei Schweißelektroden einer Schweißzange mit Hilfe eines Elektrodenantriebs gegen einen Schweißpunkt der Werkstücke gepresst, bis eine vorgegebene Elektrodenkraft erreicht ist. Anschließend erfolgt der eigentliche Schweißprozess, im Zuge dessen die Schweißelektroden für die Dauer einer Schweißzeit mit einem Schweißstrom bestromt werden, wodurch eine Widerstandserwärmung der beiden zu verschweißenden Werkstücke zwischen den Schweißelektroden erfolgt und die Werkstücke bis zum Erreichen einer erforderlichen Schweißtemperatur erhitzt werden.

Beispielsweise beschreibt die DE 35 45 158 A1 ein Verfahren zur Regelung eines Schweißprozesses, bei dem Prozessparameter, die dessen untergeordneten Steuerung oder Regelung dienen, jeweils abhängig von einer zyklisch gemessenen Qualitätsabweichung von vorgegebenen Qualitätskriterien innerhalb vorgegebener Grenzwerte verändert werden, wobei die Prozessparameter als Prozessparametersätze jeweils zugeordnet zu der zugehörigen zyklisch bestimmten Qualitätsabweichung gespeichert werden und jeweils eine bestimmte Anzahl der Sätze, die den geringsten Qualitätsabweichungen zugeordnet sind, ausgewählt werden, aus deren Parametern durch statistische Variation jeweils ein Satz neuer Parameter bestimmt wird, mit denen der Prozess anschließend gesteuert wird.

### Offenbarung der Erfindung

Vor diesem Hintergrund werden ein Verfahren zum Widerstandsschweißen sowie eine Steuereinheit, ein Schweißgerät und ein Computerprogramm zu dessen Durchführung mit den Merkmalen der unabhängigen Patentansprüche vorgeschlagen. Vorteilhafte Ausgestaltungen sind Gegenstand der Unteransprüche sowie der nachfolgenden Beschreibung.

Im Rahmen des vorliegenden Verfahrens werden Schweißprozesse durchgeführt, im Zuge derer jeweils gemäß vorgegebenen Schweißparametern Schweißelektroden gegen einen Schweißpunkt von Werkstücken gepresst und mit einem Schweißstrom bestromt werden. Somit wird im Zuge jedes dieser Schweißprozesse jeweils ein Schweißpunkt geschweißt.

Die Schweißparameter stellen insbesondere vorgegebene Soll-Werte bzw. einen zeitlichen Verlauf von Soll-Werten dar, gemäß welchen der jeweilige Schweißprozess durchgeführt werden soll. Insbesondere kann es sich bei den Schweißparametern um elektrische und/oder mechanische Werte handeln, welche die Bewegung bzw. Bestromung der Schweißelektroden betreffen. Beispielsweise können die Schweißparameter für einen durchzuführenden Schweißprozess in Abhängigkeit von den zu verschweißenden Werkstücken vorgegeben werden. Insbesondere können die Schweißparameter in Form eines sog. Schweißprogramms hinterlegt sein, welches zweckmäßigerweise von einer entsprechenden Schweißsteuerung ausgeführt wird.

Ferner wird im Zuge dieser Schweißprozesse jeweils wenigstens ein eine Schweißqualität bzw. eine Schweißpunktqualität kennzeichnender Kennwert bestimmt. Diese Kennwerte beschreiben jeweils insbesondere eine Qualität des hergestellten Schweißpunkts und/oder des durchgeführten Schweißprozesses. Diese Kennwerte können jeweils beispielsweise im Zuge des jeweiligen Schweißprozesses messtechnisch erfasst werden und/oder aus erfassten Messwerten abgeleitet werden.

Die bestimmten Kennwerte werden statistisch analysiert und in Abhängigkeit von einem Ergebnis dieser statistischen Analyse wird bestimmt, ob eine Anpassung der vorgegebenen Schweißparameter durchgeführt werden soll. Wenn dies der Fall ist, werden zukünftige Schweißprozesse zweckmäßigerweise mit diesen angepassten Schweißparametern durchgeführt.

Im Rahmen des vorliegenden Verfahrens wird somit untersucht, ob die aktuell verwendeten Schweißparameter zu einer gewünschten Schweißqualität führen. Sollte dies nicht der Fall sein, werden die Schweißparameter angepasst, um in folgenden Schweißprozessen eine bessere Schweißqualität zu erreichen.

Das vorliegende Verfahren basiert auf einer statistischen Analyse der geschweißten Schweißpunkte. Eine entsprechende Schweißsteuerung protokolliert den Ablauf jeder Schweißung, das Protokoll wird auf statistischer Basis analysiert. Wenn eine Anpassung durchgeführt werden soll, wird insbesondere eine Anpassung des Strom- und Kraftprofils und gegebenenfalls auch weitere Schweißparameter berechnet und in die Steuerung geschrieben bzw. zurückgeschrieben. Die Steuerung schweißt nun weiter mit den neuen Parametern.

Die statistische Analyse wird nach einer Anzahl (N≥1) von durchgeführten Schweißprozessen durchgeführt. Dabei wird insbesondere eine statistische Analyse aller zuletzt (z.B. der letzten M; M und N können gleich sein) mit den aktuellen vorgegebenen Schweißparametern durchgeführten Schweißprozesse durchgeführt und überprüft, ob eine Anpassung der Schweißparameter in der Steuerung durchgeführt werden soll.

Wenn beispielsweise ein oder mehrere vorgegebene Kriterien erfüllt sind, wird eine Anpassung durchgeführt. Wenn das eine oder die mehreren Kriterien hingegen nicht erfüllt sind, wird auch die nächste Anzahl von Schweißprozessen weiterhin mit den aktuellen vorgegebenen Schweißparametern durchgeführt, zweckmäßigerweise so lange, bis diese Kriterien erfüllt sind. Insbesondere kann somit eine kontinuierliche Analyse durchgeführt werden.

Insbesondere kann die statistische Analyse somit nach jedem Schweißprozess durchgeführt werden. Die Anzahl von Schweißprozessen kann beispielsweise fest vorgegeben sein oder auch flexibel neu vorgegeben werden, z.B. nach jeder statistischen Analyse. Wenn beispielsweise eine vergleichsweise starke Anpassung der Schweißparameter nötig ist, kann die nächste Anzahl von Schweißprozessen gering gewählt werden, um in vergleichsweise kurzer Zeit erneut eine Überprüfung durchzuführen. Wenn hingegen nur eine vergleichsweise geringe oder gar keine Anpassung der Schweißparameter nötig ist, kann die nächste Anzahl von Schweißprozessen höher gewählt werden, um erst nach einer vergleichsweise längeren Zeit erneut eine Überprüfung durchzuführen.

Besonders zweckmäßig können Schweißprozesse im Rahmen des vorliegenden Verfahrens somit zyklisch durchgeführt werden, wobei im Zuge eines jeden Zyklus die vorgegebene Anzahl von Schweißprozessen durchgeführt wird. Somit wird in jedem Zyklus überprüft, ob die Anpassung der Schweißparameter vorgenommen werden soll, und wenn ja wird der darauffolgende Zyklus mit den angepassten Schweißparametern durchgeführt. Ebenso ist es zweckmäßigerweise möglich, die Überprüfung auf Anpassung der Schweißparameter auch kontinuierlich nach jedem Schweißprozess vorzunehmen.

Die Schweißparameter werden somit kontinuierlich und dynamisch an die jeweils aktuelle Schweißqualität angepasst. Die Anpassung erfolgt ferner insbesondere automatisiert, so dass die Schweißparameter automatisch angepasst werden und ein manuelles Eingreifen von Benutzern zweckmäßigerweise nicht nötig ist. Widerstandsschweißprozesse können somit stets mit optimal angepassten Schweißparametern durchgeführt werden, um eine bestmögliche Schweißqualität zu erreichen.

Besonders vorteilhaft charakterisiert der wenigstens eine die Schweißqualität kennzeichnende Kennwert Schweißspritzer, die während des jeweiligen Schweißprozesses auftreten, insbesondere Spritzerzeitpunkte, zu welchen jeweils ein Schweißspritzer während eines jeweiligen Schweißprozesses auftritt. Als Schweißspritzer seien in diesem Zusammenhang Tropfen geschmolzenen Metalls zu verstehen, die aufgrund der extremen Intensität von Hitze und Kraft, die an oder um den Schweißpunkt herum aufgebracht werden, ausbrechen. Derartige Schweißspritzer können die Schweißqualität negativ beeinflussen und zur Verschmutzung von metallischen Oberflächen führen, insbesondere den Werkstückoberflächen und den Oberflächen des Schweißgeräts selbst, beispielsweise den Elektrodenkappen. Daher ist es von Bedeutung, Schweißspritzer präzise erkennen zu können, um derartigen negativen Einflüssen entgegenwirken zu können. Durch das vorliegende Verfahren kann das Auftreten derartiger Schweißspritzer durch adaptives, automatisiertes Anpassen der Schweißparameter reduziert werden. Eine manuelle Anpassung kann zweckmäßigerweise entfallen. Ferner können durch übermäßiges Spritzerauftreten verursachte sog. Q-Stopps, also Linienstopps aufgrund von Qualitätsproblemen, vermieden werden.

Auf herkömmliche Weise werden Schweißprogramme, bei welchen häufig Schweißspritzer auftreten, zumeist manuell neu parametriert, meist mit einem geringeren Strom zu bestimmten Zeitpunkten im Schweißablauf. Weil Spritzer eine Materialaustreibung aus der Schweißlinse darstellen, sorgen Schweißgeräte mit UIR-Regelung dafür, dass die Schweißzeit verlängert wird, um die Schweißlinse wiederaufzubauen und um die Punktqualität zu gewährleisten. Jedoch wird dabei die Schweißdauer eines spritzenden Punkts verlängert, was dazu führen kann, dass ein Ablauf auf einer Fertigungsstraße langsamer vorangeht. Im Gegensatz dazu können im Zuge des vorliegenden Verfahrens durch statistisches Auswerten des Kennwerts aufgetretene Schweißspritzer erkannt werden und die Schweißparameter können automatisiert angepasst werden, um bei zukünftigen Schweißprozessen das Auftreten von Schweißspritzern zu reduzieren oder möglichst zu vermeiden. Qualität und Effektivität der durchgeführten Schweißprozesse können somit erhöht werden.

Vorzugsweise wird die statistische Analyse in Abhängigkeit von einer Anzahl und/oder einer Rate von Schweißspritzern durchgeführt, die während der Anzahl von Schweißprozessen auftreten. Anzahl und Rate von Schweißspritzern beschreiben insbesondere eine Spritzerkritikalität. Insbesondere kann zunächst bewertet werden, ob die Anzahl bzw. Rate der aufgetretenen Spritzer hoch genug ist, um eine Schweißparameteranpassung zu rechtfertigen. Falls die Anzahl bzw. die Rate der Schweißspritzer, die während der Anzahl der Schweißprozesse auftreten, einen jeweiligen vorgegebenen Schwellwert nicht erreichen, kann insbesondere bewertet werden, dass die Schweißparameter gut genug gewählt sind, so dass es kaum zu Schweißspritzern kommt, und dass eine Anpassung der Schweißparameter nicht nötig ist. Erreichen die Anzahl bzw. die Rate an Schweißspritzern hingegen den jeweiligen Schwellwert, wird zweckmäßigerweise bewertet, dass es einer Anpassung der Schweißparameter bedarf.

Erfindungsgemäß wird die statistische Analyse in Abhängigkeit von einem statistischen Mittelwert, erfindungsgemäß von einem Median von Spritzerzeitpunkten durchgeführt, zu welchen jeweils ein Schweißspritzer während eines jeweiligen Schweißprozesses auftritt. Somit wird zweckmäßigerweise ausgewertet, zu welchen Zeitpunkten während eines Schweißprozesses die Schweißspritzer im Mittel auftreten. Beispielsweise kann rückgeschlossen werden, wie der zeitliche Verlauf von Soll-Werten als Schweißparameter angepasst werden kann, um zu entsprechenden Zeitpunkten das Auftreten von Schweißspritzern zu verhindern.

Erfindungsgemäß wird die statistische Analyse in Abhängigkeit von einer Streuung, insbesondere einer Varianz und/oder Standardabweichung von Spritzerzeitpunkten, zu welchen jeweils ein Schweißspritzer während eines jeweiligen Schweißprozesses auftritt, durchgeführt. Die Streuung hilft insbesondere dabei festzustellen, ob Schweißparameter, die zu Schweißspritzern führen, ein beständiges Verhalten haben, damit die richtige Art der Anpassung umgesetzt werden kann. Multi-modale Schweißprogramme können zu mehreren Zeitpunkten zu Schweißspritzern führen und benötigen dementsprechend eine aufwändigere Anpassung.

Erfindungsgemäß wird die statistische Analyse in Abhängigkeit von einer Differenz (Øt - kσ) aus dem Median Øt der Spritzerzeitpunkte und einem Produkt aus der Standardabweichung σ der Spritzerzeitpunkte und einer vorgebbaren Konstante k durchgeführt. Diese Differenz (Øt - kσ) stellt eine besonders zweckmäßige Bewertungsgröße dar, anhand welcher die Anpassung der Schweißparameter durchgeführt werden kann. Der Wert der Konstanten k kann zweckmäßig ausgewählt werden, beispielsweise von einem Anwender selbst. Wenn beispielsweise (Øt - kσ) in einer sog. Vorphase der Bestromung der Schweißelektroden liegt, kann die Schweißstromstärke z.B. in einem Zeitbereich von Beginn des Schweißprozesses bis zu dem Spritzerzeitpunkt plus k mal die Standardabweichung oder bis Ende eines ersten Sequenz- bzw. Weldblocks verringert werden. Wenn (Øt - kσ) beispielsweise nach der Vorphase liegt, kann der bestehenden Stromparametrierung z.B. eine negative Rampe hinzugefügt werden.

Bevorzugt wird die statistische Analyse in Abhängigkeit von einer Überprüfung durchgeführt, insbesondere einer Chi-Quadrat-Überprüfung, ob ein Auftreten von Schweißspritzern während der Anzahl von Schweißprozessen einer Zufallsverteilung entspricht. Insbesondere wird im Zuge dieser Überprüfung statistisch festgestellt, ob das Spritzervorkommen eine ausreichende zufällige Verteilung besitzt. Durch diese Überprüfung kann insbesondere ausgeschlossen werden, dass Schweißparameter fälschlicherweise angepasst werden. Insbesondere wird überprüft, ob das Spritzervorkommen über alle Schweißpunkte, die mit den Schweißparametern geschweißt sind, zufällig verteilt ist, oder ob eine systematische Häufung bzw. Wiederkehr mehrerer Schweißspritzer existiert. Eine positive Überprüfung bedeutet insbesondere, dass das Spritzervorkommen ausreichend zufällig verteilt ist und dass eine Anpassung der Schweißparameter vorgenommen werden sollte. Eine negative Überprüfung deutet insbesondere darauf hin, dass die Schweißparameter in Ordnung sind, aber eventuell für eine falsche Anwendung verwendet wurden. In diesem Fall wird insbesondere keine Anpassung der Schweißparameter vorgenommen.

Vorteilhafterweise wird die statistische Analyse ferner in Abhängigkeit von einem Material der Werkstücke und/oder von Eigenschaften der Schweißelektroden durchgeführt. Zweckmäßigerweise werden somit das zu verschweißende Material sowie die Schweißelektroden selbst im Zuge der Analyse mitberücksichtigt, da sie sich auf das Auftreten von Schweißspritzern auswirken können. Insbesondere wird der Ablauf jeder Schweißung protokolliert, zweckmäßigerweise mit den entsprechenden statistischen Größen, und das entsprechende Protokoll wird auf statistischer Basis nach jeder Kombination von Material, Schweißzange, Schweißprogramm und Spritzerzeitpunkt analysiert.

Besonders bevorzugt umfassen die vorgegebenen Schweißparameter eine Elektrodenkraft und/oder eine Schweißstrom und/oder eine Schweißspannung und/oder eine Schweißzeit und/oder einen zeitlichen Verlauf einer Elektrodenkraft und/oder einen zeitlichen Verlauf einer Schweißstromstärke und/oder einen zeitlichen Verlauf einer Schweißspannung. Die anzupassenden Schweißparameter betreffen somit mechanische sowie elektrische Größen bzw. deren zeitliche Verläufe.

Besonders vorteilhaft eignet sich das Verfahren für den Karosserierohbau, insbesondere für automatisierte Schweißprozesse im Karosserierohbau, vorzugsweise im Zuge einer Kraftfahrzeugproduktion. Insbesondere werden dabei Bleche miteinander verschweißt, um die Karosserie eines Kraftfahrzeugs herzustellen. Im Zuge des Herstellungsprozesses einer einzigen Karosserie können bis zu mehrere tausend Schweißpunkte (z.B. ca. 5.000 Schweißpunkte für ein Mittelklasse-Fahrzeug) automatisiert bearbeitet werden. Durch das Verfahren können die einzelnen Schweißpunkte mit bestmöglicher Qualität verschweißt werden.

Eine erfindungsgemäße Steuereinheit (Recheneinheit), z.B. eine Schweißsteuerung eines Schweißgeräts, ist, insbesondere programmtechnisch, dazu eingerichtet, ein erfindungsgemäßes Verfahren durchzuführen. Die Steuereinheit bzw. Schweißsteuerung kann beispielsweise als SPS (speicherprogrammierbare Steuerung), als NC (Numerical Control) oder CNC (Computerised Numerical Control) ausgebildet sein.

Ein erfindungsgemäßes Schweißgerät zum Widerstandsschweißen weist insbesondere eine Schweißzange mit Schweißelektroden sowie einen Elektroantrieb zum Bewegen der Schweißelektroden auf. Insbesondere kann auch ein Roboter vorgesehen sein, um die Schweißzange anzusteuern, beispielsweise im Falle einer pneumatischen Schweißzange. Ferner umfasst das Schweißgerät eine bevorzugte Ausgestaltung einer erfindungsgemäßen Steuereinheit.

Auch die Implementierung eines erfindungsgemäßen Verfahrens in Form eines Computerprogramms oder Computerprogrammprodukts mit Programmcode zur Durchführung aller Verfahrensschritte ist vorteilhaft, da dies besonders geringe Kosten verursacht, insbesondere wenn ein ausführendes Steuergerät noch für weitere Aufgaben genutzt wird und daher ohnehin vorhanden ist. Geeignete Datenträger zur Bereitstellung des Computerprogramms sind insbesondere magnetische, optische und elektrische Speicher, wie z.B. Festplatten, Flash-Speicher, EEPROMs, DVDs u.a.m. Auch ein Download eines Programms über Computernetze (Internet, Intranet usw.) ist möglich.

Weitere Vorteile und Ausgestaltungen der Erfindung ergeben sich aus der Beschreibung und der beiliegenden Zeichnung.

Die Erfindung ist anhand von Ausführungsbeispielen in der Zeichnung schematisch dargestellt und wird im Folgenden unter Bezugnahme auf die Zeichnung ausführlich beschrieben.

### Figurenbeschreibung

- Figur 1: zeigt schematisch eine bevorzugte Ausgestaltung eines erfindungsgemäßen Schweißgeräts, das dazu eingerichtet ist, eine bevorzugte Ausführungsform eines erfindungsgemäßen Verfahrens durchzuführen.
- Figur 2: zeigt schematisch eine bevorzugte Ausführungsform eines erfindungsgemäßen Verfahrens als ein Blockdiagramm.
- Figur 3: zeigt schematisch zeitliche Verläufe einer Schweißspritzeranzahl, eines Schweißwiderstands und eines Stromwerts, welche einer bevorzugten Ausführungsform eines erfindungsgemäßen Verfahrens zugrunde liegen können.

### Detaillierte Beschreibung der Zeichnung

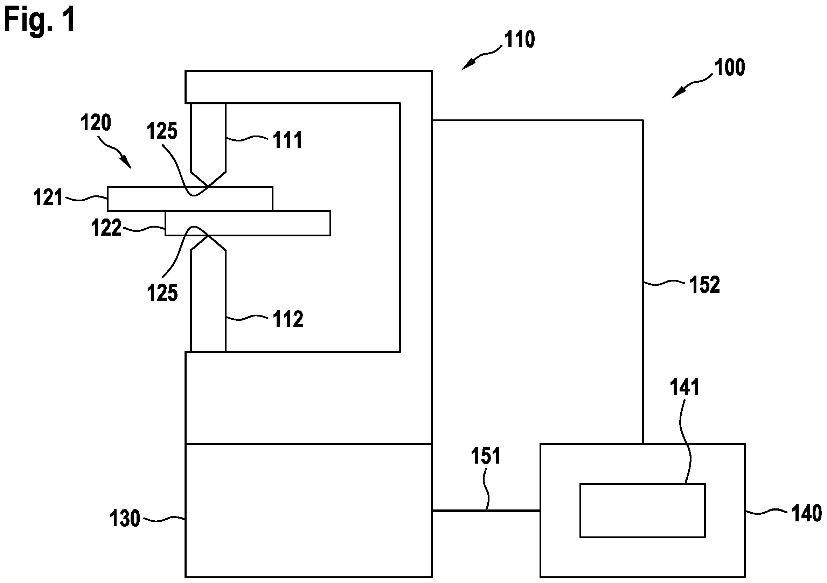

In Figur 1 ist ein Schweißgerät zum Widerstandsschweißen schematisch dargestellt und mit 100 bezeichnet.

Mit dem Schweißgerät 100 können Werkstücke 120 durch Widerstandsschweißen miteinander stoffschlüssig verbunden werden. Insbesondere werden die Werkstücke 120 im Zuge eines Karosserierohbaus miteinander verschweißt, wobei insbesondere eine Karosserie eines Kraftfahrzeugs hergestellt wird. Als Werkstücke werden hier beispielsweise zwei Bleche 121 und 122 aus Aluminium miteinander verschweißt.

Das Schweißgerät 100 weist eine Schweißzange 110 mit zwei Schweißelektroden 111 und 112 auf. Ein Elektrodenantrieb 130 ist vorgesehen, um die Schweißelektroden 111, 112 zu bewegen. In Figur 1 ist die Schweißzange 110 beispielsweise als eine servoelektrische Schweißzange dargestellt mit einem als Servomotor ausgebildeten Elektrodenantrieb 130. Ebenso ist es denkbar, dass der Elektrodenantrieb 130 beispielsweise als Elektromotor, Hydraulikmotor oder Pneumatikmotor ausgebildet sein kann.

Im Zuge des Widerstandsschweißprozesses werden während einer sog. Kraftaufbauphase die Schweißelektroden 111 und 112 mit Hilfe des Elektrodenantriebs 130 mit einer Elektrodenkraft an einem Schweißpunkt 125 gegen die Bleche 121 und 122 gedrückt. Anschließend werden die Schweißelektroden 111 und 112 während des eigentlichen Schweißprozesses für die Dauer einer Schweißzeit mit einem Schweißstrom bestromt, wodurch eine Widerstandserwärmung der Bleche 121 und 122 am Schweißpunkt 125 erfolgt und es zu einem Verflüssigen der Oberfläche der Werkstücke 121, 122 kommt. Ferner weist das Schweißgerät 100 eine Steuereinheit (Schweißsteuerung) 140 auf, welche beispielsweise als SPS (speicherprogrammierbare Steuerung) ausgebildet sein kann. Die Steuereinheit 140 ist dazu eingerichtet, den Elektrodenantrieb 130 und die Schweißzange 110 anzusteuern, angedeutet durch die Bezugszeichen 151 und 152, und um somit den Schweißprozess zu regeln. Zu diesem Zweck wird in der Steuereinheit 140 ein entsprechendes Steuerungsprogramm bzw. Schweißprogramm 141 ausgeführt, durch welches Elektrodenantrieb 130 und Schweißzange 110 gemäß vorgegebenen Schweißparametern angesteuert werden. Diese Schweißparameter können beispielsweise einen zeitlichen Verlauf einer Elektrodenkraft sowie eines Schweißstroms umfassen.

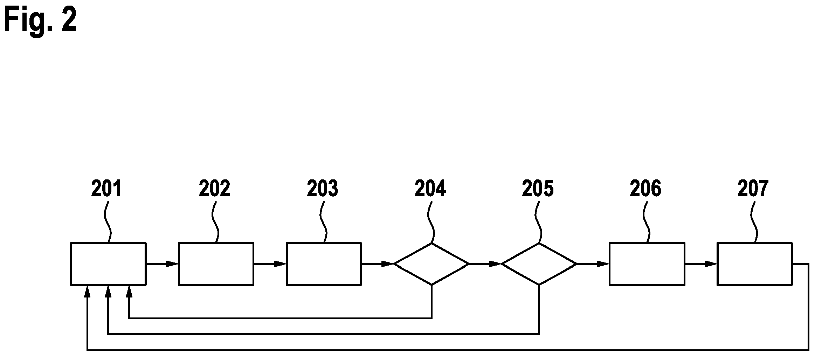

Die Steuereinheit 140 ist ferner dazu eingerichtet, eine Qualität der durchgeführten Schweißprozesse bzw. der erzeugten Schweißpunkte 125 zu analysieren und die Schweißparameter bei nicht ausreichender Qualität entsprechend anzupassen. Zu diesem Zweck ist die Steuereinheit 140, insbesondere programmtechnisch, dazu eingerichtet, eine bevorzugte Ausführungsform eines erfindungsgemäßen Verfahrens durchzuführen, welche in Figur 2 schematisch als ein Blockdiagramm dargestellt ist und nachfolgend in Bezug auf die Figuren 1 und 2 erläutert wird.

Gemäß einer bevorzugten Ausführungsform werden Schweißprozesse zyklisch durchgeführt. Im Zuge eines jeden Zyklus wird jeweils eine vorgegebene Anzahl von Schweißprozessen durchgeführt und statistisch analysiert. In Abhängigkeit von dieser Analyse werden die Schweißparameter bei Bedarf angepasst und der darauffolgende Zyklus wird mit den angepassten Schweißparametern durchgeführt.

In einem Schritt 201 wird die entsprechende vorgegebene Anzahl von Schweißprozessen durchgeführt, wobei im Zuge jeder dieser Schweißprozesse jeweils gemäß den vorgegebenen Schweißparametern die Schweißelektroden 111, 112 gegen einen Schweißpunkt 125 von Werkstücken 121, 122 gepresst und mit einem Schweißstrom bestromt werden. Beispielsweise können 1.000 - 2.000 Schweißprozesse durchgeführt werden.

Ferner wird gemäß Schritt 202 im Zuge jeder dieser Schweißprozesse jeweils wenigstens ein eine Schweißqualität kennzeichnender Kennwert bestimmt. Diese Kennwerte charakterisieren insbesondere Schweißspritzer, die während des jeweiligen Schweißprozesses auftreten. Beispielsweise werden Spritzerzeitpunkte, zu welchen jeweils ein Schweißspritzer während eines jeweiligen Schweißprozesses auftritt, als Kennwerte bestimmt. Nachdem die vorgegebene Anzahl von Schweißprozessen durchgeführt wurde, werden die bestimmten Kennwerte, also die bestimmten Spritzerzeitpunkte statistisch analysiert.

Insbesondere werden zunächst in Schritt 203 Anzahl und Rate der Schweißspritzer während der Anzahl der Schweißprozesse bestimmt. In Schritt 204 wird überprüft, ob die Anzahl und die Rate jeweils einen vorgegebenen Schwellwert erreichen. Wenn dies nicht der Fall ist, deutet dies darauf hin, dass die Schweißparameter ausreichend gut gewählt sind, so dass nur sehr wenige Schweißspritzer auftreten. In diesem Fall wird keine Anpassung der Schweißparameter vorgenommen und die nächste Anzahl von Schweißprozessen wird mit unveränderten Schweißparametern durchgeführt.

Erreichen Schweißspritzeranzahl oder Schweißspritzerrate hingegen jeweils den vorgegebenen Schwellwert, deutet dies darauf hin, dass eine Spritzerkritikalität überschritten ist und dass eine Anpassung der Schweißparameter vorgenommen werden sollte, um das Auftreten von Schweißspritzen zu reduzieren.

In diesem Fall wird in Schritt 205 eine Überprüfung durchgeführt, ob das Auftreten der Schweißspritzer einer Zufallsverteilung entspricht. Insbesondere wird zu diesem Zweck eine Chi-Quadrat-Überprüfung durchgeführt. Diese Überprüfung soll ausschließen, dass das Schweißprogramm fälschlicherweise für eine Schweißparameteranpassung gewählt wird. Zu diesem Zweck wird überprüft, ob das Spritzervorkommen über alle Schweißpunkte, die mit diesem Schweißprogramm geschweißt wurden, zufällig verteilt ist, oder ob eine systematische Häufung bzw. Wiederkehr mehrerer Schweißspritzer existiert.

Eine negative Überprüfung deutet darauf hin, dass die Parametrierung des Schweißprogrammes in Ordnung ist, aber eventuell für die falsche Anwendung eingesetzt wurde. In diesem Fall wird keine Anpassung der Schweißparameter vorgenommen, sondern zweckmäßigerweise das Programm gewechselt. Eine positive Überprüfung hingegen bedeutet, dass das Spritzervorkommen ausreichend zufällig verteilt ist. In diesem Fall wird eine Anpassung der Schweißparameter vorgenommen.

Zu diesem Zweck werden in Schritt 206 aus den bestimmten Kennwerten, also aus den Spritzerzeitpunkten, der Median Øt sowie die Standardabweichung σ der Spritzerzeitpunkte bestimmt. In Abhängigkeit von einer Differenz (Øt - kσ) aus dem Median und einem Produkt aus der Standardabweichung und einer vorgebbaren Konstante k wird in Schritt 207 bestimmt, wie die Schweißparameter angepasst werden, um in darauffolgenden Schweißprozessen das Auftreten von Schweißspritzern zu reduzieren.

Mit diesen angepassten Schweißparametern wird erneut die vorgegebene Anzahl von Schweißprozessen durchgeführt. Die Schweißparameter werden somit kontinuierlich und dynamisch an die jeweils aktuelle Schweißqualität angepasst. Diese Anpassung erfolgt besonders zweckmäßig automatisiert ohne manuelles Eingreifen von Benutzern.

Gemäß einer bevorzugten Ausführungsform ist es auch möglich, die statistische Analyse nach jedem Schweißprozess durchzuführen. Auch in diesem Fall wird im Zuge jedes Schweißprozesses jeweils wenigstens ein eine Schweißqualität kennzeichnender Kennwert bestimmt. Insbesondere werden als dieser Kennwert wie obig in Bezug auf Schritt 202 erläutert Spritzerzeitpunkte, zu welchen jeweils ein Schweißspritzer auftritt, bestimmt. Insbesondere wird in diesem Fall die obig erläuterte Überprüfung gemäß den Schritten 203 bis 207 nach jedem Schweißprozess durchgeführt. Dabei werden nach jedem Schweißprozess gemäß Schritt 203 Anzahl und Rate der Schweißspritzer bestimmt, die während der durchgeführten Schweißprozesse aufgetreten sind, welche zweckmäßigerweise mit denselben Schweißparametern durchgeführt wurden. Wie in Bezug auf Schritt 204 erläutert, wird überprüft, ob die Anzahl und die Rate jeweils einen vorgegebenen Schwellwert erreichen. Wenn dies nicht der Fall ist, wird der nächste Schweißprozess mit unveränderten Schweißparametern durchgeführt. Wenn dies hingegen der Fall ist, wird gemäß Schritt 205 eine Chi-Quadrat-Überprüfung durchgeführt. Bei negativer Überprüfung wird insbesondere das Programm gewechselt, bei positiver Überprüfung wird zweckmäßigerweise eine Anpassung der Schweißparameter vorgenommen, insbesondere wie obig gemäß den Schritten 206 und 207 erläutert. Mit diesen angepassten Schweißparametern wird der nächste Schweißprozess durchgeführt.

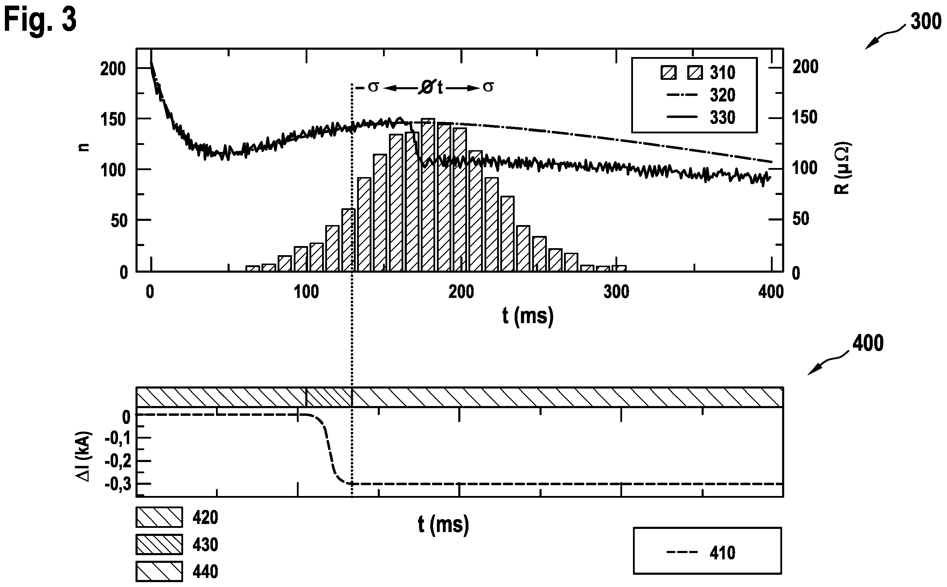

Figur 3 zeigt schematisch zeitliche Verläufe von Größen, welche einer bevorzugten Ausführungsform des erfindungsgemäßen Verfahrens zugrunde liegen können.

In einem Diagramm 300 ist die Anzahl n der Schweißspritzer, die während eines Zyklus von Schweißprozessen auftreten, aufgetragen gegen die Zeitdauer t der jeweiligen Schweißprozesse. Die Balken 310 repräsentieren jeweils eine Anzahl von Schweißspritzern, die jeweils zu einem bestimmten Zeitpunkt während des jeweiligen Schweißprozesses aufgetreten sind.

Ferner ist in dem Diagramm 300 ein Schweißwiderstand R gegen die Zeitdauer t aufgetragen. Kurve 320 repräsentiert eine Referenzkurve für den Schweißwiderstand bei einem Schweißprozess mit hoher Schweißqualität, bei welchem keine Schweißspritzer auftreten. Kurve 330 hingegen repräsentiert den Schweißwiderstand bei einem Schweißprozess mit Schweißspritzern.

Ferner ist in Diagramm 300 ein Intervall zwischen den Werten (Øt - kσ) und (Øt + kσ) gezeigt, wobei Øt der Median der Spritzerzeitpunkte ist, σ die Standardabweichung der Spritzerzeiten und wobei für die Konstante k der Wert eins gewählt wurde.

Wie obig erläutert, wird in Abhängigkeit von der Größe (Øt - kσ) bestimmt, wie die Schweißparameter für den nächsten Zyklus von Schweißprozessen angepasst werden. Wenn der Wert der Bewertungsgröße (Øt - kσ) beispielsweise wie in Figur 3 gezeigt in einer sog. Vorphase während der ersten 150 ms des Schweißprozesses liegt, wird die Schweißstromstärke wie in dem Diagramm 400 gezeigt verringert.

In Diagramm 400 ist ein Stromwert ΔI, um welchen die Schweißstromstärke als Schweißparameter verringert wird, aufgetragen gegen die Zeitdauer t des Schweißprozesses. Kurve 410 repräsentiert den zeitlichen Verlauf dieses Stromwerts. Während einer Phase 420 findet dabei keine Anpassung der Schweißstromstärke statt. In der Phase 430 wird die Schweißstromstärke verringert und in der Phase 440 wird der Schweißprozess mit der entsprechend verringerten Schweißstromstärke fortgesetzt.

Alternativ ist vorgesehen, dass ein Regressionsmodell verwendet wird, um für einen nächsten zu schweißenden Schweißpunkt die Wahrscheinlichkeit sowie den Zeitpunkt des Auftretens eines Schweißspritzers vorherzusagen. Wenn die vom Regressionsmodell geschätzte Wahrscheinlichkeit für das Auftreten eines Spritzers für die nächste Schweißung oberhalb eines vom Anwender definierten Grenzwertes liegt, wird für den nächsten Punkt automatisch eine Anpassung der Schweißparameter vorgenommen. Auf diese Art können viele Parameter angepasst werden, um Spritzern zuvorzukommen, ohne die Punktqualität einzuschränken.

Das Regressionsmodell basiert insbesondere auf rekurrenten, neuronalen Netzwerken, und erkennt selbst, welche der Eingabegrößen hinsichtlich ihrer Ausgaben/Zielwerte zu berücksichtigen sind. Dem Modell können sämtliche protokollierte Daten aus der Schweißsteuerung zugeführt werden, z.B. Zeitreihen aus Referenz- und/oder Ist-Kurven, verwendete Schweißparameter einer Schweißung und abgeleitete Daten wie die Zeitspanne zwischen den einzelnen Schweißungen. Ausgaben des Modells könnten die Spritzerwahrscheinlichkeit und -Zeitpunkt sein, wovon ein Gradient in Bezug auf die Eingabegrößen gebildet werden kann. Mit diesem Gradienten können die Parameter automatisch angepasst werden, um die Wahrscheinlichkeit für das Auftreten von Spritzern zu minimieren.

## Patentansprüche

1. Verfahren zum Widerstandsschweißen, wobei Schweißprozesse durchgeführt werden (201), im Zuge derer jeweils gemäß vorgegebenen Schweißparametern Schweißelektroden (111, 112) gegen einen Schweißpunkt (125) von Werkstücken (121, 122) gepresst und mit einem Schweißstrom bestromt werden (201), wobei im Zuge dieser Schweißprozesse jeweils wenigstens ein eine Schweißqualität kennzeichnender Kennwert bestimmt wird (202), wobei nach einer Anzahl von durchgeführten Schweißprozessen eine statistische Analyse der bestimmten Kennwerte durchgeführt wird (203, 204, 205, 206) und
wobei in Abhängigkeit von einem Ergebnis dieser statistischen Analyse bestimmt wird, ob eine Anpassung der vorgegebenen Schweißparameter durchgeführt wird (207),
**dadurch gekennzeichnet, dass**
die statistische Analyse in Abhängigkeit von einem Median (Øt) und von einer Streuung (σ) von Spritzerzeitpunkten, zu welchen jeweils ein Schweißspritzer während eines jeweiligen Schweißprozesses auftritt (206), durchgeführt wird und
die statistische Analyse in Abhängigkeit von einer Differenz aus dem Median (Øt) der Spritzerzeitpunkte und einem Produkt aus der Standardabweichung (σ) der Spritzerzeitpunkte und einer vorgebbaren Konstante durchgeführt wird (206).

2. Verfahren nach Anspruch 1, wobei der wenigstens eine die Schweißqualität kennzeichnende Kennwert Schweißspritzer charakterisiert, die während des jeweiligen Schweißprozesses auftreten, insbesondere Spritzerzeitpunkte, zu welchen jeweils ein Schweißspritzer während eines jeweiligen Schweißprozesses auftritt.

3. Verfahren nach Anspruch 1 oder 2, wobei die statistische Analyse in Abhängigkeit von einer Anzahl und/oder einer Rate von Schweißspritzern durchgeführt wird, die während der Anzahl von Schweißprozessen auftreten (203, 204, 205).

4. Verfahren nach einem der vorstehenden Ansprüche, wobei die statistische Analyse in Abhängigkeit von einer Überprüfung, insbesondere einer Chi-Quadrat-Überprüfung, ob ein Auftreten von Schweißspritzern während der Anzahl von Schweißprozessen einer Zufallsverteilung entspricht, durchgeführt wird (205).

5. Verfahren nach einem der vorstehenden Ansprüche, wobei die statistische Analyse ferner in Abhängigkeit von einem Material der Werkstücke (111, 112) und/oder von Eigenschaften der Schweißelektroden (121, 122) durchgeführt wird.

6. Verfahren nach einem der vorstehenden Ansprüche, wobei die vorgegebenen Schweißparameter einen oder mehrere der nachfolgenden Parameter umfassen:
- eine Elektrodenkraft,
- einen Schweißstrom,
- eine Schweißspannung,
- eine Schweißzeit,
- einen zeitlichen Verlauf einer Elektrodenkraft,
- einen zeitlichen Verlauf einer Schweißstromstärke, und
- einen zeitlichen Verlauf einer Schweißspannung.

7. Steuereinheit (140), die dazu eingerichtet ist, ein Schweißgerät (100) mit Schweißelektroden (111, 112) und mit einem Elektrodenantrieb (130) zum Bewegen der Schweißelektroden (111, 112) so anzusteuern, dass ein Verfahren nach einem der vorstehenden Ansprüche durchgeführt wird.

8. Schweißgerät (100) mit Schweißelektroden (111, 112), mit einem Elektrodenantrieb (130) zum Bewegen der Schweißelektroden (111, 112) und mit einer Steuereinheit (140) nach Anspruch 7.

9. Computerprogramm, das die Steuereinheit (140) eines Schweißgeräts (100) nach Anspruch 8 veranlasst, das Schweißgerät (100) so anzusteuern, dass es ein Verfahren nach einem der Ansprüche 1 bis 6 durchführt, wenn es auf der Steuereinheit (140) ausgeführt wird.

10. Maschinenlesbares Speichermedium mit einem darauf gespeicherten Computerprogramm nach Anspruch 9.

## Claims

1. Method for resistance welding, wherein welding processes are carried out (201), in the course of which, in each case in accordance with predefined welding parameters, welding electrodes (111, 112) are pressed against a welding spot (125) of workpieces (121, 122) and are energized with a welding current (201), wherein, in the course of these welding processes, in each case at least one characteristic value that characterizes a quality of the welding is determined (202), wherein, after a number of welding processes which have been carried out, a statistical analysis of the determined characteristic values is carried out (203, 204, 205, 206) and
wherein, in dependence on a result of this statistical analysis, it is determined whether an adaptation of the predefined welding parameters is carried out (207),
**characterized in that**
the statistical analysis is carried out in dependence on a median (Øt) and a dispersion (σ) of spattering times at which in each case welding spatter occurs during a respective welding process (206), and
the statistical analysis is carried out in dependence on a difference between the median (Øt) of the spattering times and a product of the standard deviation (σ) of the spattering times and a predefinable constant (206).

2. Method according to Claim 1, wherein the at least one characteristic value that characterizes the quality of the welding characterizes welding spatter occurring during the respective welding process, in particular spattering times at which welding spatter respectively occurs during a respective welding process.

3. Method according to Claim 1 or 2, wherein the statistical analysis is carried out in dependence on a number and/or a rate of instances of welding spatter that occur during the number of welding processes (203, 204, 205).

4. Method according to any of the preceding claims, wherein the statistical analysis is carried out in dependence on a check, in particular a chi-square test, as to whether an occurrence of welding spatter during the number of welding processes corresponds to a random distribution (205).

5. Method according to any of the preceding claims, wherein the statistical analysis is furthermore carried out in dependence on a material of the workpieces (111, 112) and/or on properties of the welding electrodes (121, 122).

6. Method according to any of the preceding claims, wherein the predefined welding parameters comprise one or more of the following parameters:
- an electrode force,
- a welding current,
- a welding voltage,
- a welding time,
- a temporal progression of an electrode force,
- a temporal progression of a welding current intensity, and
- a temporal progression of a welding voltage.

7. Control unit (140) which is configured to control a welding device (100) having welding electrodes (111, 112) and having an electrode drive (130) for moving the welding electrodes (111, 112) in such a way that a method according to any of the preceding claims is carried out.

8. Welding device (100) having welding electrodes (111, 112), having an electrode drive (130) for moving the welding electrodes (111, 112) and having a control unit (140) according to Claim 7,

9. Computer program which causes the control unit (140) of a welding device (100) according to Claim 8 to control the welding device (100) in such a way that it carries out a method according to any of Claims 1 to 6 when it is executed on the control unit (140) .

10. Machine-readable storage medium with a computer program according to Claim 9 stored on it.

## Revendications

1. Procédé de soudage par résistance, des processus de soudage étant effectués (201) au cours desquels des électrodes de soudage (111, 112) sont pressées contre un point de soudage (125) de pièces (121, 122) et alimentées avec un courant de soudage (201) à chaque fois conformément à des paramètres de soudage spécifiés, au moins une valeur caractéristique, qui caractérise une qualité de soudage, étant déterminée (202) au cours de chacun de ces processus de soudage, une analyse statistique des valeurs caractéristiques déterminées étant effectuée (203, 204, 205, 206) après avoir effectué un certain nombre de processus de soudage, et une détermination quant à l'opportunité d'un ajustement des paramètres de soudage spécifiés étant effectuée (207) en fonction d'un résultat de cette analyse statistique,
**caractérisé en ce que**
l'analyse statistique est effectuée en fonction d'une médiane (Øt) et d'une dispersion (σ) d'instants de projection auxquels une projection de soudure est effectuée pendant un processus de soudage respectif (206) et
l'analyse statistique est effectuée en fonction d'une différence entre la médiane (Øt) des instants de projection et un produit de l'écart type (σ) des instants de projection et d'une constante spécifiée (206) .

2. Procédé selon la revendication 1, l'au moins une valeur caractéristique, qui caractérise la qualité de soudage, caractérisant les projections de soudure qui se produisent pendant le processus de soudage respectif, en particulier les instants de projection auxquels une projection de soudure se produit pendant un processus de soudage respectif.

3. Procédé selon la revendication 1 ou 2, l'analyse statistique étant effectuée en fonction d'un nombre et/ou d'un taux de projections de soudure qui se produisent pendant le nombre de processus de soudage (203, 204, 205).

4. Procédé selon l'une des revendications précédentes, l'analyse statistique étant effectuée (205) en fonction d'un test, en particulier d'un test du khi deux, pour savoir si des projections se produisent pendant le nombre de processus de soudage conformément à une distribution aléatoire.

5. Procédé selon l'une des revendications précédentes, l'analyse statistique étant également effectuée en fonction d'un matériau des pièces (111, 112) et/ou de propriétés des électrodes de soudage (121, 122).

6. Procédé selon l'une des revendications précédentes, les paramètres de soudage spécifiés comprenant un ou plusieurs des paramètres suivants :
- une force d'électrode,
- un courant de soudage,
- une tension de soudage,
- un temps de soudage,
- une variation dans le temps d'une force d'électrode,
- une variation dans le temps d'une intensité de courant de soudage, et
- une variation dans le temps d'une tension de soudage.

7. Unité de commande (140), qui est conçue pour commander un appareil de soudage (100) comprenant des électrodes de soudage (111, 112) et un entraînement d'électrode (130) destiné à déplacer les électrodes de soudage (111, 112) de manière à mettre en œuvre un procédé selon l'une des revendications précédentes.

8. Appareil de soudage (100) comprenant des électrodes de soudage (111, 112), un entraînement d'électrodes (130) destiné à déplacer les électrodes de soudage (111, 112) et une unité de commande (140) selon la revendication 7.

9. Logiciel qui ordonne à l'unité de commande (140) d'un appareil de soudage (100) selon la revendication 8 de commander l'appareil de soudage (100) de manière à mettre en œuvre un procédé selon l'une des revendications 1 à 6 lorsque ledit logiciel est exécuté sur l'unité de commande (140).

10. Support de stockage lisible par machine sur lequel est stocké un logiciel selon la revendication 9.
